# EUROPÄISCHE PATENTANMELDUNG

(11) **EP 2 568 330 A2**
(43) Veröffentlichungstag der Anmeldung: **13.03.2013**
(21) Anmeldenummer: 12183783.5
(22) Anmeldetag: 10.09.2012
(51) Int. Cl.: G03B 15/05, G03B 37/06

(54) **Vorrichtung zur Aufnahme eines omnidirektionalen Bilds und Fotoautomat mit dieser Vorrichtung**

(30) Priorität: 09.09.2011 AT 12962011
(71) Anmelder: Huemer, Christof, 4048 Puchenau (AT)
(72) Erfinder: Huemer, Christof, 4048 Puchenau (AT)
(74) Vertreter: Jell, Friedrich

(57) **Zusammenfassung**

Es wird ein Fotoautomat (1) und eine Vorrichtung (2) zur Aufnahme eines omnidirektionalen Bilds mit einem omnidirektionalen Bildsystem (3) und mit mindestens einem, ein omnidirektionales Blitzlicht (9) erzeugendes Blitzgerät (7, 24, 27, 33) gezeigt, das wenigstens ein Leuchtmittel (8) aufweist. Um eine hohe Bildqualität bei einem Panoramabild mit einem Portrait im Vordergrund ermöglichen zu können, wird vorgeschlagen, dass das Blitzgerät (7, 24, 27, 33) zur Erzeugung des omnidirektionales Blitzlichts (9) einen für das Leuchtmittel (8) bzw. einen für die Leuchtmittel (8) gemeinsam vorgesehenen Reflektor (10) aufweist, über den sich wenigstens ein Teil des Blitzlichts (9) reflektiert.

## Beschreibung

Die Erfindung betrifft eine Vorrichtung zur Aufnahme eines omnidirektionalen Bilds mit einem omnidirektionalen Bildsystem und mit einem wenigstens ein Leuchtmittel aufweisenden Blitzgerät zur Erzeugung eines omnidirektionalen Blitzlichts.

Um auch bei Dunkelheit omnidirektionale Bilder mit Überwachungseinrichtung, aufweisend ein omnidirektionales Bildsystem, insbesondere eine katadioptrische Kamera, aufnehmen zu können, ist es aus dem Stand der Technik bekannt (DE202006013714U1), Infrarot-Leuchtdioden vorzusehen, die ringförmig nacheinander angeordnet ein omnidirektionales Infrarot-Blitzlicht erzeugen. Nachteilig bei einer derartigen Anordnung von Leuchtdioden (LED) ist, dass eine gleichmäßige Beleuchtung bzw. Ausleuchtung der aufzunehmenden Objekte nicht gewährleistet werden kann. Einerseits ergibt sich durch diese Anordnung der LED eine überlappende Abstrahlcharakteristik mit nachteilig unterschiedlichen Helligkeitswerten an den aufzunehmenden Objekten, andererseits kann durch die von LED bekannte Fokussierung eine nachteilige Schattenbildung bei den aufzunehmenden Objekten, insbesondere im Nahbereich der Kamera, nicht vermieden werden. Eine verminderte Aufnahmequalität muss daher in Kauf genommen werden, was bei einer Überwachungseinrichtung eher tolerierbar ist als bei Panoramafotographien mit Objekten im Nahbereich.

Die Erfindung hat sich daher die Aufgabe gestellt, ausgehend vom eingangs geschilderten Stand der Technik ein omnidirektionales Bildsystem zu schaffen, mit dem eine hohe Aufnahmequalität bei einem omnidirektionalen Bild mit Objekten im Nahbereich des Bildsystems sichergestellt werden kann.

Die Erfindung löst die gestellte Aufgabe dadurch, dass das Blitzgerät zur Erzeugung des omnidirektionales Blitzlichts einen für das Leuchtmittel bzw. einen für die Leuchtmittel gemeinsam vorgesehenen Reflektor aufweist, über den sich wenigstens ein Teil des Blitzlichts reflektiert.

Weist das Blitzgerät einen für das Leuchtmittel bzw. einen für die Leuchtmittel gemeinsam vorgesehenen Reflektor auf, über den sich wenigstens ein Teil des Blitzlichts reflektiert, dann kann auf konstruktiv einfache Weise die Abstrahlcharakteristik und/oder Lichtcharakteristik des Blitzlichts für Aufnahmen von omnidirektionalen Bildern deutlich verbessert werden. Mit dem Reflektor kann nämlich nicht nur sichergestellt werden, dass sich das Blitzlicht kontrolliert ausbreitet, sondern es kann damit insbesondere auch ermöglicht werden, dass eine gleichmäßige und vollständige Beleuchtung der Objekte im Nahbereich des omnidirektionalen Bildsystems besteht. Im Allgemeinen wird erwähnt, dass ein derartiges omnidirektionales Bildsystem ein katadioptrisches Bildsystem, ein mosaikbasierendes Bildsystem, ein rotierendes Bildsystem, etc. darstellen kann. Für all diese omnidirektionale Bildsysteme können nun mit diesem besonderen, sich in alle Richtungen ausbreitenden bzw. omnidirektionale Blitzlicht unter anderem starke Hell-Dunkelkontraste sowie gleichzeitig auch Abschattungen vermindert werden. Schlagschatten können damit deutlich verringert werden. Hinzu kommt, dass mit solch einer Blitzbeleuchtung auch aufzunehmende Objekte im Nahbereich des omnidirektionalen Bildsystems in einer hohen Bildqualität erfasst werden können. Es kann nämlich in der Art eines gleichmäßigen Aufhellungsblitzes verhindert werden, dass sich der Vorder- gegenüber dem Hintergrund des Bildes abdunkelt und so unklare und unreine Farben entstehen. Gerade bei einer Bildaufnahme eines Panoramas mit nahen Objekten im Vordergrund kann so eine deutliche Verbesserung der Bildqualität geschaffen werden, wodurch sich die erfindungsgemäße Vorrichtung gegenüber dem Stand der Technik besonders auszeichnen kann.

Kompakte Konstruktionsverhältnisse können sich ergeben, wenn das Blitzgerät samt Reflektor von einem zumindest teilweise lichtdurchlässigen Gehäuse umfasst wird. Außerdem kann damit das Blitzgerät gegenüber Verschmutzungen und Beschädigungen auf einfache Weise geschützt werden.

Eine gleichmäßige Beleuchtung kann weiter verbessert werden, wenn wenigstens ein Leuchtmittel mindestens eine ringförmige Blitzröhre aufweist. Insbesondere Objekte im Nahbereich können damit besonders homogen ausgeleuchtet werden, weil bekannte Beleuchtungsmaxima durch überlappende Abstrahlung mehrerer Leuchtmittel vermieden werden können. Selbst lichtemittierende Dioden sind dadurch als Leuchtmittel vorstellbar, weil über den gemeinsamen Reflektor für eine gleichmäßige Abstrahlcharakteristik und/oder eine weiche Lichtcharakteristik des Blitzlichts gesorgt werden kann.

Umläuft die sich vertikal geneigte, insbesondere horizontal erstreckende Blitzröhre den Reflektor im Wesentlichen, dann kann in der Art eines Aufhellreflektors für eine gleichmäßige omnidirektionale Beleuchtung gesorgt werden. Die Bildqualität des omnidirektionalen Bilds kann dadurch noch weiter verbessert werden.

Kompakte Konstruktionsverhältnisse der Vorrichtung können sich ergeben, wenn das Blitzgerät an das omnidirektionale Bildsystem anschließend angeordnet ist. Insbesondere kann damit auch die Helligkeit eines Porträts im Vordergrund deutlich verbessert werden, so dass vergleichsweise hohe Tiefenschärfe samt gleichmäßiger Ausleuchtung bei einem Panoramabild mit einem Porträt im Vordergrund gewährleistet werden kann. Das Blitzgerät kann hierfür oberhalb, unterhalb oder auf beiden Seiten des Bildsystems angeordnet sein, um damit die Ausleuchtung im Nahbereich des Bildsystems noch weiter zu verbessern.

Die Aufnahme des Bilds kann ermöglicht werden, wenn das omnidirektionale Bildsystem einen parabolischen Spiegel umfasst. Mehrere aneinandergereihte Linsen sind anstatt des Spiegels ebenso vorstellbar.

Verbesserte Aufnahmeeinstellungen können auf einfache Weise ermöglicht werden, wenn die Kamera einen Sensor zur Belichtungsmessung und/oder Schärfenmessung durch das Objektiv der Kamera aufweist. Tiefenschärfe, Helligkeit und insbesondere die Blitzeinstellungen können damit aufeinander abgestimmt werden, um ein ausgewogenes Belichtungsverhältnis gegenüber Objekten im Vorder- und Hintergrund zu ermöglichen, wenn für die Blitzeinstellungen außerdem die Kamera mit dem Blitzgerät zum Einstellen der Blitzleistung dessen Leuchtmittels in Abhängigkeit der Sensordaten verbunden ist. Diese durch das Objektiv hindurch erfolgende Messvorgang, was auch unter TTL ("Through the Lens") bekannt ist, kann daher die Qualität des omnidirektionalen Bilds noch weiter verbessern. Außerdem kann damit auch die Tiefenschärfe über die Blende vorteilhaft gesteuert werden. Ein externer Sensor zur Belichtungsmessung und/oder Schärfenmessung bzw. eine Fotodiode zur Lichtmessung ist alternativ vorstellbar. Diese Diode kann via Funk oder Kabel mit der Kamera verbunden sein.

Weist das Blitzgerät einen vorzugsweise semitransparenten Diffusor für wenigstens Teile des Blitzlichts auf, dann kann die Bildqualität noch weiter gesteigert werden.

Insbesondere kann damit die Ausleuchtung in der Art einer Softbox noch gleichmäßiger ermöglicht werden, so dass unter anderem ein Porträt im Vordergrund der Aufnahme noch besser zur Geltung kommen bzw. aufgenommen werden kann. Vorzugsweise tritt durch den Diffusor im Wesentlichen das gesamte Blitzlicht (reflektierte und nicht reflektierte Blitzlicht) des Blitzgeräts aus.

Kompakte Bauverhältnisse können sich ergeben, wenn das bzw. die Leuchtmittel des Blitzgeräts unterhalb und der Reflektor des Blitzgeräts oberhalb des Bildsystems angeordnet sind. Zudem kann sich damit die Verschaltung der elektronischen Komponenten vereinfachen, weil im Gegensatz zu einer Anordnung oberhalb des Bildsystems keine Datenleitungen zum Blitzgerät geführt werden müssen. Mit einer Beeinträchtigung des omnidirektionalen Bilds durch Kabel etc. muss daher nicht in Kauf genommen werden.

Weist das Blitzgerät einen Lichtformer auf, der auf den oberhalb des Bildsystems angeordneten Reflektor gerichtet ist, kann ein direktes Einstrahlen von Blitzlicht in das Bildsystem reduziert werden. Zudem kann der Lichtformer zur Auffächerung einer eventuellen Bündelung des Blitzlichts dienen. Beispielsweise können sich Lamellen-Lichtumformer hierfür auszeichnen.

Das direkte Einstrahlen von Blitzlicht in das Bildsystem kann weiter vermindert werden, wenn das Blitzgerät eine Gürtellinse aufweist, die das bzw. die Leuchtmittel des Blitzgeräts umfasst. Das abstrahlende Blitzlicht kann nämlich so -über die Gürtellinse gebündelt- zum oberhalb des Bildsystems angeordneten Reflektor gelenkt werden, um damit ein omnidirektionales Blitzlicht zu erzeugen.

Vorteilhaft kann ein Panoramabild mit einem Porträt im Vordergrund mit einer vergleichsweise hohen Qualität aufgenommen werden, wenn das erfindungsgemäße Blitzgerät samt dem omnidirektionalen Bildsystem bei einem Fotoautomat verwendet werden.

Besondere Bedienungseigenschaften können sich ergeben, wenn der Fotoautomat eine mit der Vorrichtung verbundene Bildverarbeitungseinrichtung und eine Bedienungseinrichtung zur Bedienung des Fotoautomats aufweist, wobei die Bildverarbeitungseinrichtung in Abhängigkeit einer Eingabe an der Bedienungseinrichtung mit der Kamera zur Entzerrung des von der Vorrichtung aufgenommenen omnidirektionalen Bilds verbunden ist. Damit kann nicht nur ein automatisiert aufgenommenes Panoramabild ermöglicht werden, sondern es kann damit auch eine Porträtaufnahme im Vordergrund des Panoramabilds mit hoher Bildqualität sichergestellt werden.

Die Bedienbarkeit des Fotoautomats kann weiter vereinfacht werden, wenn der Fotoautomat einen mit der Bildverarbeitungseinrichtung verbundenen Speicher für die aufgenommenen und entzerrten omnidirektionalen Bilder sowie einen über eine Datenverbindung anwählbaren Webserver aufweist, der mit dem Speicher zur Übertragung der Bilder über die Datenverbindung verbunden ist. Über den Webserver kann nämlich auf einfache Weise auf die omnidirektionalen Bilder zugegriffen werden, die erfindungsgemäß in vergleichsweise hoher Bildqualität vom Fotoautomaten aufgenommen worden sind.

Besondere Verhältnisse können sich ergeben, wenn diese Vorrichtung zur Aufnahme von Panoramabildern mit einem Porträt im Vordergrund verwendet wird, weil selbst bei nahen Objekten eine besondere Belichtung durch das Blitzgerät sichergestellt werden kann, was einen besonders einfach handhabbaren Fotoautomat schaffen kann.

In den Figuren ist beispielsweise der Erfindungsgegenstand anhand von Ausführungsbeispielen dargestellt. Es zeigen
- Fig. 1: eine Seitenansicht auf einen geschnittenen Fotoautomaten mit einer Vorrichtung zur Aufnahme eines omnidirektionalen Bilds,
- Fig. 2: eine vergrößerte Ansicht auf den oberen Teil der Fig. 1,
- Fig. 3: eine Ansicht auf eine alternative Ausführung zum Leuchtmittel nach Fig. 2,
- Fig. 4.: eine vergrößerte Ansicht auf den unteren Teil der Fig. 1,
- Fig. 5: einen nach Fig. 1 dargestellten Fotoautomaten mit zwei Blitzgeräten,
- Fig. 6: eine weitere Ausführung zu einem Blitzgerät für einen nach Fig. 1 dargestellten Fotoautomaten,
- Fig. 7: eine Seitenansicht einer weiteren Ausführung zu einem Fotoautomaten und
- Fig. 8: eine weitere Ausführung zu einem Blitzgerät für einen nach Fig. 1 dargestellten Fotoautomaten.

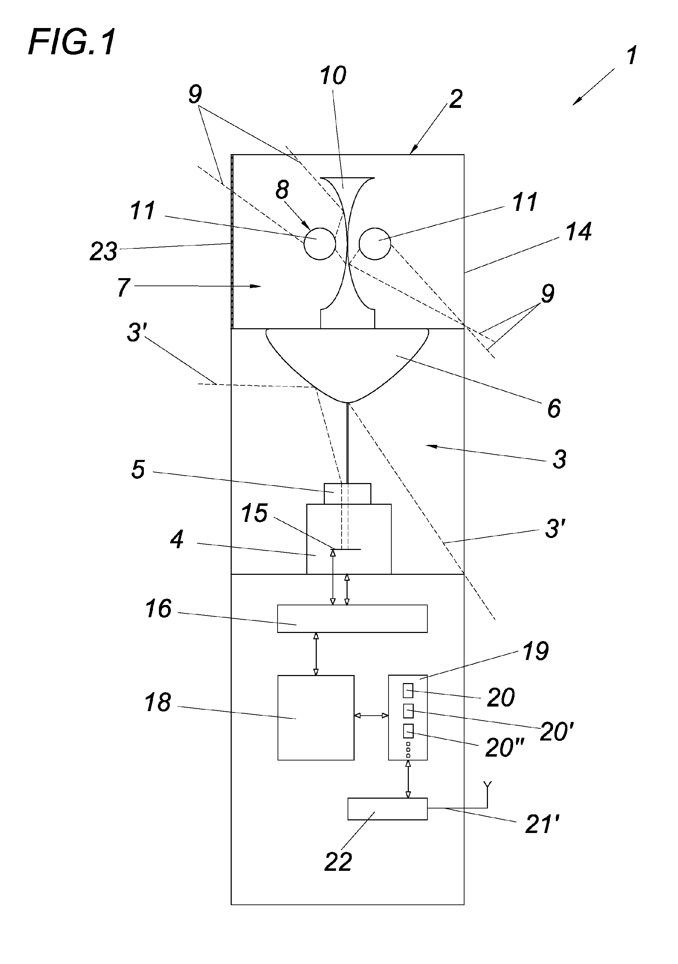

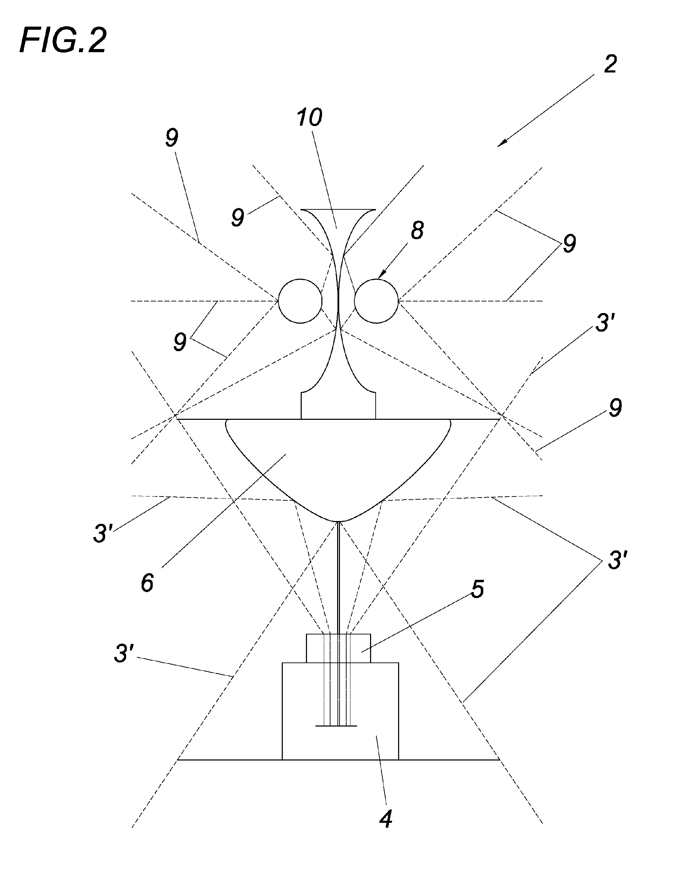

Das nach Fig. 1 dargestellte erste Ausführungsbeispiel zeigt einen Fotoautomaten 1 in einer teilweisen Schnittansicht. An seinem oberen Teil ist eine Vorrichtung 2 zur Aufnahme eines omnidirektionalen Bilds bzw. Panoramabilds erkennbar. Diese Vorrichtung 2 weist ein omnidirektionales Bildsystem 3 auf. Dieses hier als katadioptrisches Bildsystem dargestellte omnidirektionale Bildsystem 3 umfasst eine Kamera 4, ein Objektiv 5 mit einer nicht näher dargestellten Linse und einen parabolischen Spiegel 6, welches Bildsystem 3 zusammen mit einem beispielsweisen Strahlengang in Fig. 2 vergrößert dargestellt worden ist. Mit Hilfe dieses Bildsystems 3 kann ein Bild aus allen Richtungen in einem Bereich von bis zu 360 Grad aufgenommen werden. Vertikal hat sich ein Bereich von 115 Grad als bevorzugt herausgestellt, andere Bereichsgrenzen sind durchaus denkbar, vor allem bei der Verwendung von mosaikbasierten Bildsystemen. Um diese Winkel zu ermöglichen, ist das Bildsystem derart konstruktiv ausgeführt, dass sich Lichtstrahlen 3' von allen Seiten in Richtung des Objektivs 5 der Kamera 4 bzw. des Bildsensors bei mosaikbasierten Bildsystemen gelenkt werden. Mit Hilfe solch einer Bauart kann bereits mit einer Aufnahme ein Panoramabild fotografiert werden, wodurch sich beispielsweise ein von einer rotierenden Kamera erforderliches Zusammenfügen von mehreren Bildern vermeiden lässt. Weiter ist die Vorrichtung 2 mit einem Blitzgerät 7 ausgestattet, mit dessen Leuchtmittel 8 ein omnidirektionales Blitzlicht 9 für das Panoramabild erzeugt werden kann - ein Blitzlicht 9, das in alle Richtungen zur Beleuchtung der aufzunehmenden Objekte abstrahlt. Um nun bei aufzunehmenden Objekten im Nahbereich für eine vergleichsweise hohe Bildqualität sorgen zu können, weist das Blitzgerät 7 einen für das Leuchtmittel 8 vorgesehenen Reflektor 10 auf, über den sich wenigstens ein Teil des Blitzlichts 9 des Leuchtmittels 8 reflektiert. Damit kann erfindungsgemäß eine großflächige Ausleuchtung und unter anderem auch eine verbesserte Streuung für eine weichere Beleuchtung der aufzunehmenden Objekte ermöglicht werden, was auch im Nahbereich für eine schattenfreie Ausleuchtung sorgen kann.

Einfache Konstruktionsverhältnisse können sich ergeben, wenn das Leuchtmittel 8 als ringförmige Blitzröhre 11 ausgeführt ist. Diese Blitzröhre 11 kann dann den Reflektor 10 umlaufend vorgesehen werden, wodurch sich selbst ein reflektierender Teil des Blitzlichts 9 omnidirektional ausbreiten kann. Vorteilhaft hat sich herausgestellt, wenn sich hierfür die Blitzröhre horizontal erstreckt, wodurch eine besonders weiche sowie zusätzlich auch eine gleichmäßige Beleuchtung der aufzunehmenden Objekte geschaffen werden kann.

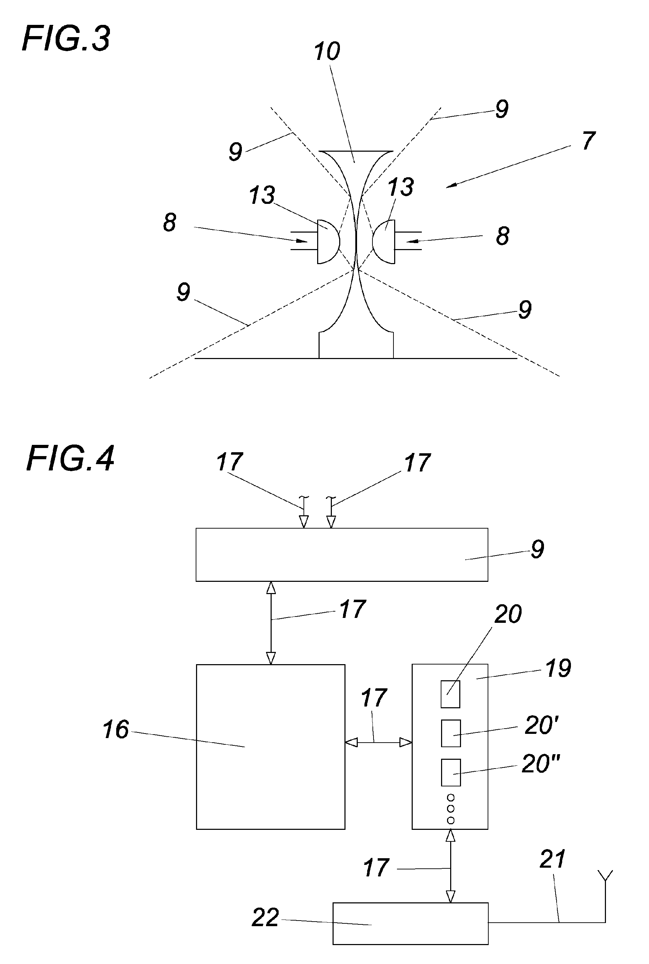

Im weiteren Ausführungsbeispiel nach Fig. 3 erzeugen mehrere Leuchtmittel 8 das omnidirektionale Blitzlicht 9. Zu diesem Zweck sind mehrere lichtemittierende Dioden 13 vorgesehen, deren Blitzlichter 9 über den gemeinsamen Reflektor 10 abstrahlen können. Durch den gemeinsamen Reflektor 10 kann -wie auch nach Fig. 1 mit einem Leuchtmittel 8- ein Blitzlicht 9 mit einer schattenfreien Ausleuchtung auch im Nahbereich des Bildsystems 3 ermöglicht werden. Außerdem kommen durch den gemeinsamen Reflektor 10 Überlappungen in der Abstrahlcharakteristik der LED 13 weniger zu Geltung, was für eine gleichmäßigere Beleuchtung sorgen kann. Damit kann selbst mit mehreren Leuchtmitteln 8 eine besonders hohe Bildqualität am omnidirektionalen Bild sichergestellt werden.

Das Blitzgerät 7 samt Reflektor 10 wird von einem zumindest teilweise lichtdurchlässigen Gehäuse 14 umfasst, wie in Fig. 1 und 2 ersichtlich. Der lichtdurchlässige Teil des Gehäuses 14 kann außerdem auch zur Veränderung der Abstrahlcharakteristik und/oder Lichtcharakteristik des Blitzlichts 9 herangezogen werden, um damit die Bildqualität im Nahbereich des Bildsystems 3 noch weiter zu verbessern.

Das Blitzgerät 7 ist an die Kamera 4 bzw. an den Spiegel 6 des Bildsystems 3 oberhalb anschließend angeordnet, um damit eine kompakte Vorrichtung 1 zu schaffen. Außerdem kann damit auf einfache Weise ein direktes Einstrahlen des Blitzlichts 9 in das Bildsystem 3 vermieden werden. Ebenso kann das Blitzgerät 7 auch unterhalb oder an einer oder an beiden Seite der Kamera 4 angeordnet sein, was nicht näher dargestellt worden ist.

Die Kamera 4 weist weiter einen Sensor 15 zur Belichtungsmessung und/oder Schärfenmessung durch das Objektiv 5 der Kamera auf. Dieses als TTL bekannte Messverfahren kann dafür genützt werden, ein ausgewogenes Belichtungsverhältnis gegenüber Objekten im Vorder- und Hintergrund zu ermöglichen. Außerdem kann damit die Tiefenschärfe verbessert eingestellt werden. Vorzugsweise kann jedoch dieses Messverfahren zur Steuerung der Blitzlichtstärke herangezogen werden, in dem die Kamera 4 mit dem Blitzgerät 7 zum Einstellen der Blitzleistung der Leuchtmittel 8 des Blitzgeräts 7 in Abhängigkeit der Sensordaten des Sensors 15 verbunden ist. Diese nicht näher dargestellte Datenverbindung kann via Kabel oder Funk erfolgen. Die Stärke des Blitzlichts 9 bzw. Lichtleistung des Blitzgeräts 7 kann so justiert bzw. auf die Umgebungsparameter verbessert angepasst werden, wodurch die Qualität des Bilds verbessert wird.

Gemäß Fig. 4 wird die Steuerung des Fotoautomaten 1 näher gezeigt. So ist eine Bildverarbeitungseinrichtung 16 vorgesehen, die mit der Vorrichtung 2 zur Aufnahme des omnidirektionalen Bilds über eine Datenleitung 17 verbunden ist. Der Fotoautomat 1 weist weiter eine Bedienungseinrichtung 18 in Form eines Eingabesystems, was beispielsweise eine Tastatur, ein berührungsempfindlicher Bildschirm etc. sein kann, und eines Ausgabesystems zum Anzeigen von Informationen und/oder Bildern. Über die Bedienungseinrichtung 18 kann der Fotoautomat von einem Benutzer gesteuert bzw. auch bedient werden. So kann beispielsweise in Abhängigkeit solch einer Eingabe an der Bedienungseinrichtung 18 einerseits ein Bild vom Fotoautomat 1 aufgenommen und dann weiter die Bildverarbeitungseinrichtung 16 zur Entzerrung des von der Vorrichtung 2 aufgenommenen omnidirektionalen Bilds verbunden werden. Damit kann beispielsweise auf der Bedienungseinrichtung 18 die von der Vorrichtung 1 aufgenommenen Panoramabilder mit Porträts im Vordergrund dem Benutzer angezeigt und eventuell über eine nicht näher dargestellte Ausgabeeinrichtung auch zur Verfügung gestellt, angezeigt und/oder beispielsweise ausgedruckt werden.

Die Bedienungsfreundlichkeit des Fotoautomats 1 kann weiter verbessert werden, wenn der Fotoautomat 1 einen mit der Bildverarbeitungseinrichtung 16 verbundenen Speicher 19 für die aufgenommenen und entzerrten omnidirektionalen Bilder 20, 20', 20", etc. und einen über eine Datenverbindung 21 anwählbaren Webserver 22 aufweist. Es kann dann über den Webserver 22 auf den Speicher 19 zur Übertragung der Bilder 20, 20', 20" über die Datenverbindung 21 zugegriffen werden, sodass eine Übertragung der aufgenommenen Bilder 20, 20', 20" keiner örtlichen Einschränkung mehr unterliegen kann.

Um die Beleuchtung der aufzunehmenden Objekte zu verbessern, kann zum Reflektor 10 auch ein Diffusor 23 vorgesehen werden. Solch ein Diffusor 23 kann beispielsweise eine Folie sein, die am Gehäuse 14 innen vorgesehen ist, um damit auch einen mechanischen Schutz zu gewährleisten. Konstruktiv einfach kann auch hierfür Milchglas oder ein semitransparentes Material verwendet werden. Reflektor 10 und Diffusor 23 in Kombination für wenigstens Teile des Blitzlichts 9 führen zu hervorragenden Bildergebnissen, was die Vorrichtung bzw. den Fotoautomat 1 gegenüber aus dem Stand der Technik bekannten Geräten besonders auszeichnet.

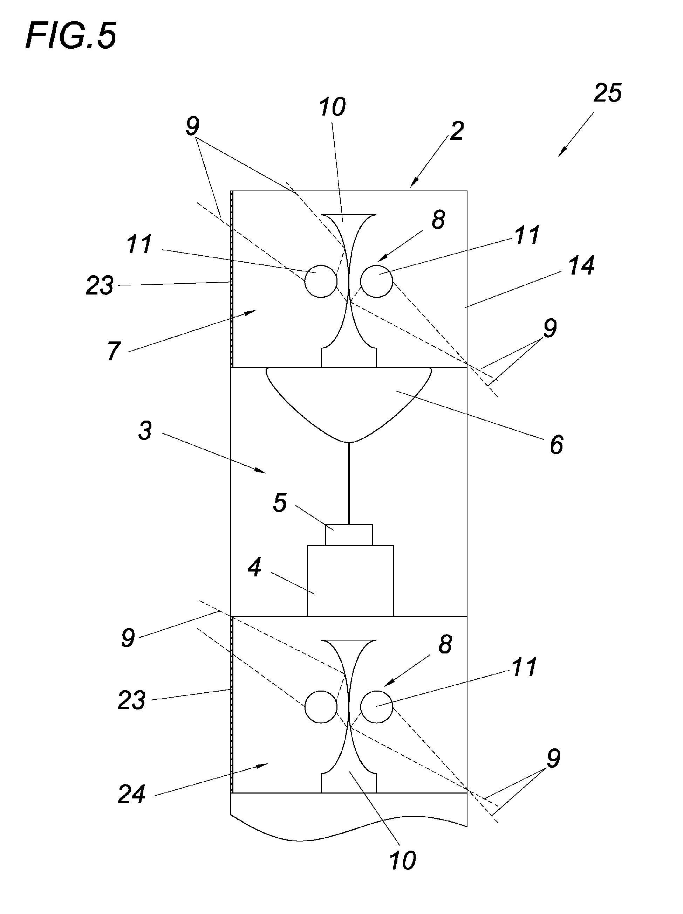

Nach Fig. 5 werden zwei Blitzgeräte 7 und 24 nach einem weiteren Ausführungsbeispiel gezeigt. Zwischen diesen Blitzgeräten 11, 24 ist das Bildsystem 3 angeordnet. Mit Hilfe einer derartigen Konstruktion kann bei diesem Fotoautomat 25 gegenüber dem nach Fig. 1 dargestellten Fotoautomat 1 neben einer erhöhten Blitzleistung auch eine verbesserte Ausleuchtung von Gegenständen im Nahbereich ermöglicht werden.

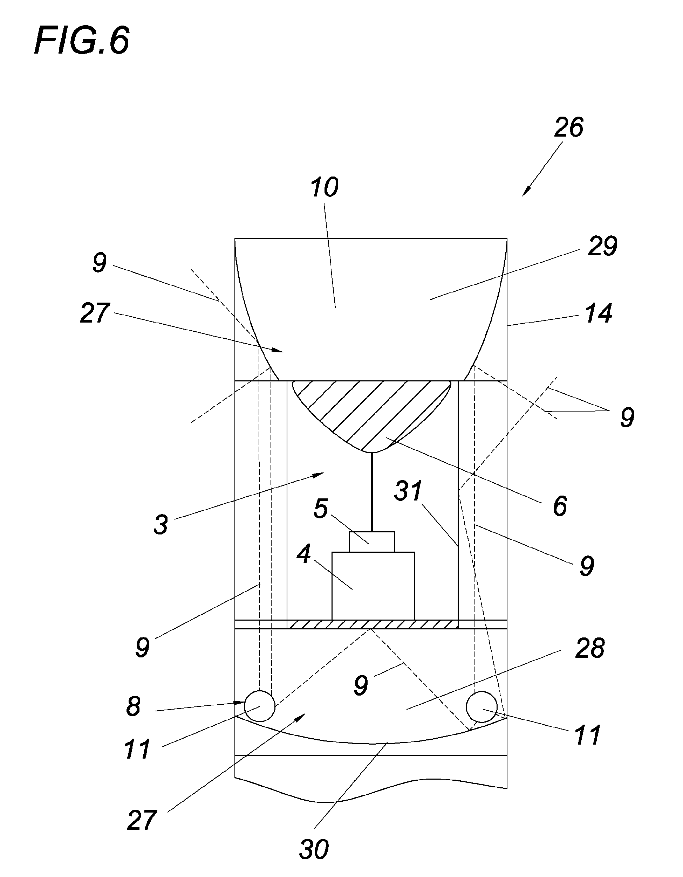

Nach Fig. 6 wird ein weiteres Ausführungsbeispiel zu einem Fotoautomat 26 in teilweiser Darstellung gezeigt. So ist hier gegenüber den anderen Ausführungsbeispielen das Blitzgerät 27 zweiteilig ausgeführt. So befindet sich ein Teil 28 unterhalb des Bildsystems 3. Dieser Teil 28 nimmt ein Leuchtmittel 8 und einen Umlenkreflektor 30 auf, der das Blitzlicht 9 auf einen oberhalb des Bildsystems 3 vorgesehenen Reflektor 10 lenkt, der dem anderen Teil 29 des Blitzgeräts 27 zugehört. In von den anderen Ausführungsbeispielen bekannter Weise strahlt der Reflektor 10 ein Blitzlicht 9 in alle Richtungen zur Beleuchtung der aufzunehmenden Objekte ab. Eine Beeinträchtigung des Bildsystems 3 durch das Blitzlicht 9 wird dadurch vermieden, dass die lichtdurchlässige Abdeckung 31 des Bildsystems 3 reflektierend auf das Blitzlicht 9 wirken kann, wie dies in der Fig. 6 beispielsweise dargestellt ist. Außerdem können zwischen den beiden Teilen 28 und 29 des Blitzgeräts 27 lichtleitende Materialien vorgesehen werden, um ein Eintreten von Blitzlicht 9 in das Bildsystem 3 zu vermeiden bzw. gering zu halten. Dafür sind auch Lichtformer mit gitterartigen Öffnungen zur Richtungsweisung des Blitzlichts 9 vorstellbar, was beispielsweise Waben mit einem Lichtaustrittswinkel von größer 8 Grad darstellen können

Durch solch eine Zweiteilung des Blitzgeräts 27 kann eine besondere konstruktive Einfachheit ermöglicht werden. Es tritt nämlich damit eine Vereinfachung der Verkabelung des Fotoautomats 26 auf.

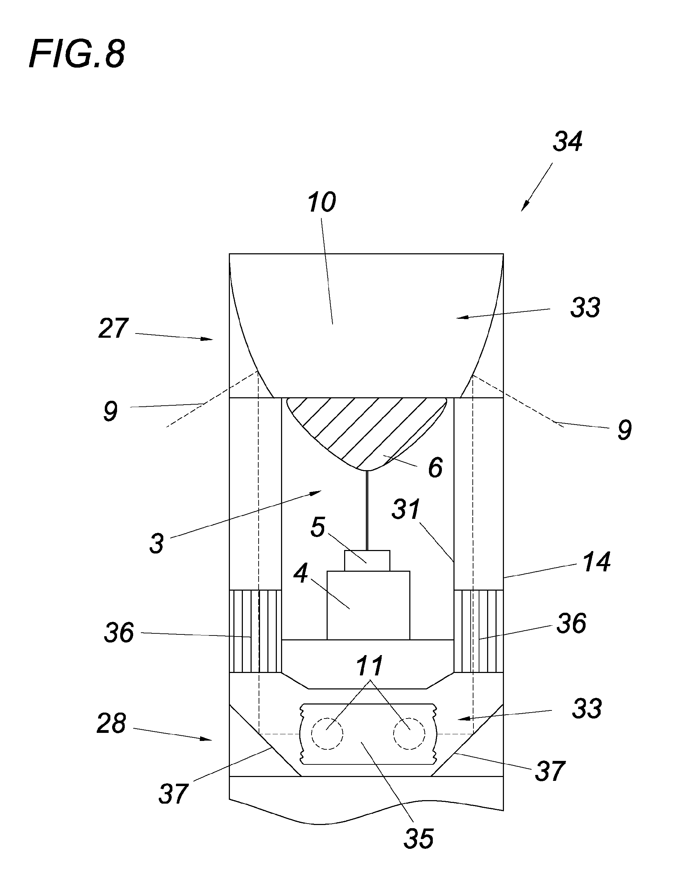

Nach Fig. 8 ist eine weitere Ausführungsform zu einem Fotoautomat 34 in teilweiser Darstellung gezeigt. Gegenüber der Ausführungsform nach Fig. 6 zeigt dieses zweiteilige Blitzgerät 33 eine Gürtellinse 35, die das Leuchtmittel 8 des Blitzgeräts 33 umfasst. Damit kann ein gebündeltes Blitzlicht 9 erzeugt und über einen Spiegel 37 auf den Reflektor 10 geleitet werden. Der Reflektor 10 ist oberhalb des Bildsystems 3 vorgesehen. Der Reflektor 10 kann, gleichwie der Spiegel 37, eine Neigung von 45 Grad in Richtung des Blitzlichts 9 aufweisen, was nicht näher dargestellt worden ist. Eine Beeinträchtigung des Bildsystems 3 durch ein direkt einstrahlendes Blitzlicht 9 ist so zu vermeiden. Auch hier ist ein Lichtformer 36 mit Lamellen, orientiert in Richtung des Blitzlichts 9, vorgesehen. Der Lichtformer 36 ist auf den oberhalb des Bildsystems 3 angeordneten Reflektor 10 gerichtet, um damit das gebündelte Blitzlicht 9 aufzufächern -jedoch damit nicht direkt in das Bildsystem 3 einzustrahlen.

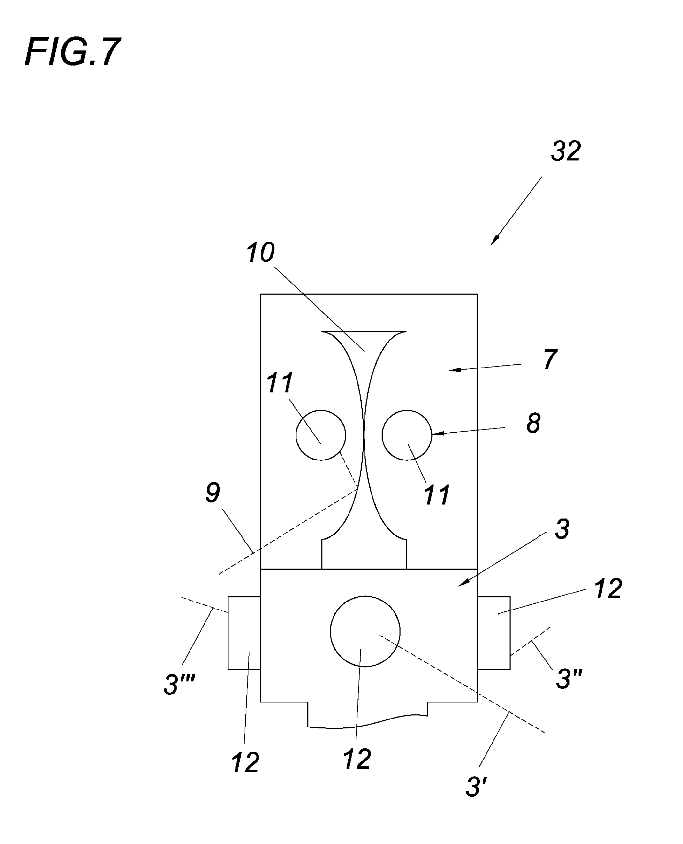

Im Allgemeinen wird erwähnt, dass ein omnidirektionales Bildsystem 3 nicht nur als katadioptrisches Bildsystem, wie in Fig. 1 dargestellt ausgeführt sein muss. Dies kann auch ein mosaikbasierendes Bildsystem sein, wie dies beispielsweise nach Fig. 7 dargestellt worden ist. Dieses weitere Ausführungsbeispiel zu einem Fotoautomat 32 weist zur Schaffung eines omnidirektionalen Bilds mehrere zu einem Verbund zusammengeschaltete Kameras 12 auf, die je einen Teil des omnidirektionalen Bilds aufnehmen. Diese Kameras 12 können auch mit je einer Weitwinkellinse (Fischeye-Linse) versehen sein, um so von einem breiteren Umfeld Lichtstrahlen 3', 3'', 3''' einfangen bzw. damit die Anzahl an Kameras 12 verringern zu können, was nicht näher dargestellt worden ist. Andere omnidirektionale Bildsysteme 3 sind vorstellbar. Oberhalb des omnidirektionalen Bildsystems 3 ist ein aus der Fig. 1 bekanntes Blitzgerät 7 vorgesehen. Dieses Blitzgerät 7 kann auch unterhalb oder auch auf den Seiten des omnidirektionalen Bildsystems 3 vorgesehen sein, was nicht näher dargestellt worden ist.

## Patentansprüche

1. Vorrichtung zur Aufnahme eines omnidirektionalen Bilds mit einem omnidirektionalen Bildsystem (3) und mit mindestens einem, ein omnidirektionales Blitzlicht (9) erzeugendes Blitzgerät (7, 24, 27, 33), das wenigstens ein Leuchtmittel (8) aufweist, **dadurch gekennzeichnet, dass** das Blitzgerät (7, 24, 27, 33) zur Erzeugung des omnidirektionales Blitzlichts (9) einen für das Leuchtmittel (8) bzw. einen für die Leuchtmittel (8) gemeinsam vorgesehenen Reflektor (10) aufweist, über den sich wenigstens ein Teil des Blitzlichts (9) reflektiert.

2. Vorrichtung nach Anspruch 1, **dadurch gekennzeichnet, dass** das Blitzgerät (7, 24, 27, 33) samt Reflektor (10) von einem zumindest teilweise lichtdurchlässigen Gehäuse (14) umfasst wird.

3. Vorrichtung nach Anspruch 1 oder 2, **dadurch gekennzeichnet, dass** wenigstens ein Leuchtmittel (8) mindestens eine ringförmige Blitzröhre (11) und/oder mehrere lichtemittierende Dioden (13) aufweist.

4. Vorrichtung nach Anspruch 3, **dadurch gekennzeichnet, dass** die sich vertikal geneigte, insbesondere horizontal erstreckende Blitzröhre (11) den Reflektor (10) im Wesentlichen umläuft.

5. Vorrichtung nach einem der Ansprüche 1 bis 4, **dadurch gekennzeichnet, dass** Blitzgerät (7, 24, 27, 33) an das omnidirektionale Bildsystem (3) anschließend angeordnet ist.

6. Vorrichtung nach einem der Ansprüche 1 bis 5, **dadurch gekennzeichnet, dass** das omnidirektionale Bildsystem (3) einen parabolischen Spiegel (6) umfasst.

7. Vorrichtung nach einem der Ansprüche 1 bis 6, **dadurch gekennzeichnet, dass** die Kamera (4) einen Sensor (15) zur Belichtungsmessung und/oder Schärfenmessung durch das Objektiv (5) der Kamera (4) aufweist und mit dem Blitzgerät (7, 24, 27, 33) zum Einstellen der Blitzleistung dessen Leuchtmittels (8) in Abhängigkeit der Sensordaten verbunden ist.

8. Vorrichtung nach einem der Ansprüche 1 bis 7, **dadurch gekennzeichnet, dass** das Blitzgerät (7, 24, 27, 33) einen vorzugsweise semitransparenten Diffusor (23) für wenigstens Teile des Blitzlichts (9) aufweist.

9. Vorrichtung nach einem der Ansprüche 1 bis 8, **dadurch gekennzeichnet, dass** das bzw. die Leuchtmittel (8) des Blitzgeräts (27, 33) unterhalb und der Reflektor (10) des Blitzgeräts (27, 33) oberhalb des Bildsystems (3) angeordnet sind.

10. Vorrichtung nach Anspruch 9, **dadurch gekennzeichnet, dass** das Blitzgerät (27, 33) einen Lichtformer (36) aufweist, der auf den oberhalb des Bildsystems (3) angeordneten Reflektor (10) gerichtet ist.

11. Vorrichtung nach Anspruch 9 oder 10, **dadurch gekennzeichnet, dass** das Blitzgerät (33) eine Gürtellinse (35) aufweist, die das bzw. die Leuchtmittel (8) des Blitzgeräts (33) umfasst.

12. Fotoautomat zur Aufnahme eines Panoramabilds mit einem Porträt im Vordergrund mit einer Vorrichtung (2) nach einem der Ansprüche 1 bis 11.

13. Fotoautomat nach Anspruch 12, **dadurch gekennzeichnet, dass** der Fotoautomat (1) eine mit der Vorrichtung (2) verbundene Bildverarbeitungseinrichtung (17) und eine Bedienungseinrichtung (18) zur Bedienung des Fotoautomats (1) aufweist, wobei die Bildverarbeitungseinrichtung (17) in Abhängigkeit einer Eingabe an der Bedienungseinrichtung (18) mit der Vorrichtung (2) zur Entzerrung des von der Kamera (4) aufgenommenen omnidirektionalen Bilds verbunden ist.

14. Fotoautomat nach Anspruch 12 oder 13, **dadurch gekennzeichnet, dass** der Fotoautomat (1) einen mit der Bildverarbeitungseinrichtung (16) verbundenen Speicher (19) für die aufgenommenen und entzerrten omnidirektionalen Bilder (20, 20', 20") sowie einen über eine Datenverbindung (17) anwählbaren Webserver (22) aufweist, der mit dem Speicher (19) zur Übertragung der Bilder (20, 20', 20") über die Datenverbindung (17) verbunden ist.

15. Verwendung einer Vorrichtung (2) nach einem der Ansprüche 1 bis 11 bei einem Fotoautomat (1) zur Aufnahme von Panoramabildern mit einem Porträt im Vordergrund.
